# EUROPEAN PATENT SPECIFICATION

(11) **EP 4 269 269 B1**
(45) Date of publication and mention of the grant of the patent: **02.10.2024**
(21) Application number: 21915280.8
(22) Date of filing: 27.12.2021
(51) Int. Cl.: B65D 8/04, B65D 25/14, A23L 2/00, B65D 6/00, B65D 85/73

(54) **CAN FOR EFFERVESCENT BEVERAGE**
DOSE FÜR BRAUSEGETRÄNK
CANETTE POUR BOISSON EFFERVESCENTE

(30) Priority: 28.12.2020 JP 2020219053; 16.11.2021 JP 2021186547
(43) Date of publication of application: 01.11.2023
(73) Proprietor: Asahi Group Holdings, Ltd., Tokyo 130-8602 (JP); Asahi Breweries, Ltd., Tokyo 130-8602 (JP)
(72) Inventor: KOHARA, Toru, Moriya-shi Ibaraki 302-0106 (JP); KURODA, Ryuhei, Moriya-shi Ibaraki 302-0106 (JP); MORITA, Midori, Moriya-shi Ibaraki 302-0106 (JP); KOBAYASHI, Yusuke, Tokyo 104-0031 (JP); NATSUMOTO, Tetsuya, Tokyo 104-0031 (JP)
(74) Representative: Hoffmann Eitle
(86) International application number: PCT/JP2021/048574
(87) International publication number: WO 2022/145421

(56) References cited:
- JP-A- 2001 180 671
- JP-A- 2005 041 217
- JP-A- 2005 041 217
- JP-A- 2007 001 081
- JP-A- 2007 008 493
- JP-A- 2007 008 493
- JP-A- H0 597 149

## Description

### Technical Field

The present invention relates to an effervescent beverage can and a method for manufacturing the same.

### Background Art

Effervescent beverages such as beer are sometimes provided in a sealed container. One important characteristic of effervescent beverages is their effervescence. Various considerations have been made to ensure that an appropriate amount of foam is obtained when the beverage is consumed.

To enhance effervescence, some containers have been designed with modifications. For instance, Patent Literature 1 (Japanese Patent No. 4758693) discloses a technique aimed at providing a can for effervescent beverages that has no adverse effect on fillability and can significantly improve effervescence upon opening. According to Patent Literature 1, the following three points are described: the inner surface of the can is coated with an organic resin coating layer; an organic resin coating material that contains a predetermined amount of large-diameter particles occupies 20% to 60% of the inner surface area of the can, while an organic resin coating material that contains a predetermined amount of small-diameter particles occupies the remaining of the inner surface area; and concave portions or convex portions formed by at least a part of the large-diameter particles that have detached or remained and concave portions formed by the small-diameter particles that have detached are present in the organic resin coating layer. Other effervescence enhancing containers are known from documents JP 2007 008493 A, JP 2007 001081 A and JP 2005 041217 A.

### Citation List

### Patent Literatures

Patent Literature 1: Japanese Patent No. 4758693

### Summary of Invention

The present inventors would like to further improve effervescence. Accordingly, an object of the present invention is to provide an effervescent beverage can capable of further improving the effervescence and a method for producing the same.

The present inventors have found that the above object can be achieved by forming a predetermined structure on the inner surface of the can, and have completed the present invention. Specifically, the present invention is achieved by an effervescent beverage can according to claim 1. Preferable embodiments are defined in the dependent claims.

The present invention provides an effervescent beverage can capable of further improving the effervescence.

### Brief Description of Drawings

Fig. 1 is a cross-sectional view schematically illustrating a crater-like structure.
Fig. 2 is a cross-sectional view schematically illustrating a method for forming a crater-like structure.
Fig. 3A is a photomicrograph illustrating the inner surface of the body of the control group.
Fig. 3B is a photomicrograph illustrating the inner surface of the body of experimental group 1.
Fig. 3C is a photomicrograph illustrating the inner surface of the body of experimental group 2.
Fig. 4A is a diagram illustrating a 3D image of the internal surface of the body of the control group.
Fig. 4B is a diagram illustrating a 3D image of the inner surface of the body of experimental group 1.
Fig. 4C is a diagram illustrating a 3D image of the inner surface of the body of experimental group 2.
Fig. 5A is a diagram illustrating the measurement positions of the surface profile of experimental group 2.
Fig. 5B is a graph illustrating the measurement results of the surface profile of experimental group 2.

### Description of Embodiments

Hereinafter, embodiments of the present invention are described in detail.

An effervescent beverage can according to the present embodiment has a top surface, a body, and a bottom surface. The body and the bottom surface are integrated or joined to form a bottomed cylindrical shape, and the upper opening is closed by the top surface so as to be openable.

The inner surface of the body is provided with a plurality of first and second recesses.

Note that in the present specification, the term "recess" refers to a structure with a depth of 1 µm or more.

The first recess has a substantially circular shape when viewed from the front. The first recess is a recess with a diameter of 5 µm or more and 20 µm or less.

The number of first recesses is 200 to 2000, preferably 300 to 1500, and more preferably 400 to 1200, per 1 mm².

The average depth of the plurality of first recesses is, for example, 1 to 5 µm, preferably 2 to 4 µm.

Note that the number and average depth of the first recesses can be obtained using, for example, a laser microscope.

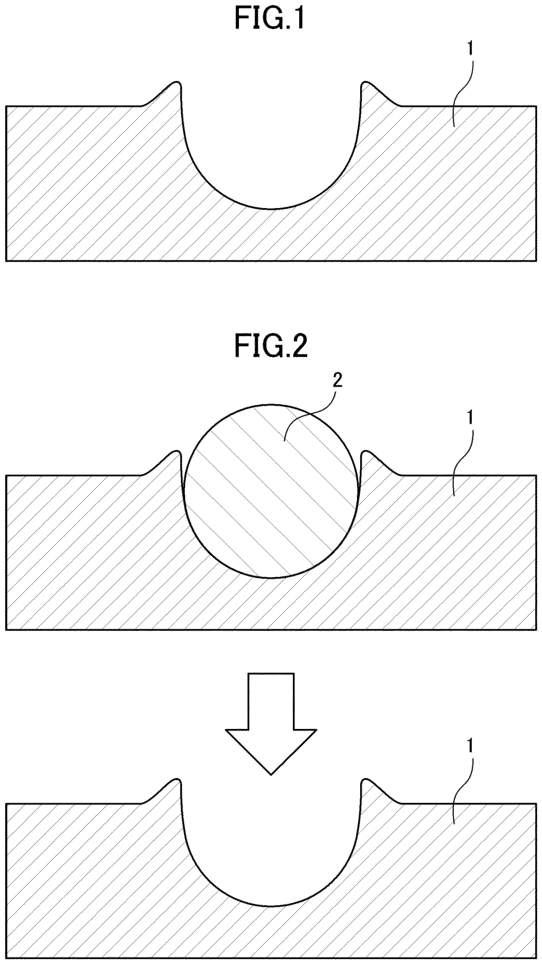

The first recess is preferably a crater-like structure. Fig. 1 is a cross-sectional view schematically illustrating a crater-like structure. As shown in Fig. 1, the crater-like structure refers to a structure in which the edge portion of the recess is reversely raised.

The second recess has a diameter of 0.5 µm or more and less than 5 µm.

The number of the plurality of second recesses is 7000 to 15000 per 1 mm².

The average depth of the plurality of second recesses is, for example, 1 to 5 µm, preferably 2 to 4 µm.

The number and average depth of the second recesses can be obtained by the same method as for the first recesses.

The second recess preferably has a crater-like structure as with the first recess.

Preferably, the effervescent beverage can according to the present embodiment is made of metal. In addition, preferably, the inner surface of the body is provided with a resin layer obtained by applying and drying paint on a metal layer, and the first recesses and the second recesses are formed in the resin layer.

The thickness of the resin layer is, for example, 1 to 10 µm, preferably 3 to 8 µm.

It should be noted that in the present invention, the "resin layer" means a layer after drying the applied paint, and is distinguished from the layer of the paint before drying.

Preferably, the can lid of the effervescent beverage can according to the present embodiment is a full open end. A full open end is a lid of the type in which a region accounting for 30% or more of the area of the ceiling surface of the can lid is opened. The region to be opened is preferably 50% or more of the ceiling surface of the can lid, more preferably 90% or more thereof, and further preferably the entire ceiling surface of the can lid.

A preferred embodiment is, for example, a type of lid in which a circular ceiling surface of the can lid is scored (notched) over the entire circumference, and the entire lid ceiling surface is detached from the can body to be opened. On the other hand, the configuration may be such that the lid is not completely detached and a part of the lid remains on the can body. Compared to a regular can lid, the full open end makes it possible to visually grasp the effervescence from the can body, which leads to evoking the image of beer poured into a mug. In addition, since a larger amount of liquid flows into the mouth at the same angle compared to a regular can lid, it is possible to enjoy the foam and liquid at the same time.

The capacity of the effervescent beverage can (the amount filled with the beverage) is, for example, 135 to 1000 ml, preferably 320 to 500 ml.

In addition, when the lid is circular, the caliber of the effervescent beverage can is, for example, 50,8 to 53,6 mm (200 to 211 caliber), preferably 51,3 to 52,3 mm (202 to 206 caliber).

Next, an example of a method for manufacturing the above-described effervescent beverage can is be described.

The manufacturing method includes applying a paint containing resin and wax to an inner surface of the body (or a region to become the inner surface of the body); and subsequently heat-treating the applied paint to form a resin layer on the inner surface and remove the wax (hereinafter also referred to as the baking step).

According to this method, the wax is removed to form recesses in the resin layer.

Note that wax is typically used for the purpose of preventing scratches on the coated film in the can manufacturing process, but in the present specification, wax refers to a component that is in the form of solid particles at room temperature.

For example, one method for forming a can body with a resin layer on the inner surface thereof is to first form a can body with a bottomed cylindrical shape using extrusion molding, and then applying the paint according to the present invention by spray coating and baking it to form the resin layer (the resulting can is called a two-piece can). Alternatively, a method for obtaining a can body with a bottomed cylindrical shape can be used, such as preparing a metal plate with a region to become the inner surface, applying paint to the region to become the inner surface, forming a resin layer by baking, then forming the metal plate with a resin layer into a cylindrical shape, and crimping the bottom of the can which becomes the bottom surface (the resulting can is called a three-piece can).

The coating and baking steps of the paint are described in detail below.

First, a paint containing resin and wax is prepared.

As the paint, for example, a water-based paint can be used.

As the resin contained in the paint, for example, epoxy resin, acrylic resin, polyester resin, urethane resin, and the like are used.

The wax in the paint has an average particle diameter of 1 µm or more. The "average particle diameter" referred to here means the particle diameter (D50) at which the volume-based cumulative frequency is 50%. This value is measured using a dynamic light scattering particle size distribution measurement device ("Microtrac S3500" manufactured by Nikkiso Co., Ltd.) for a water dispersion containing about 20 mass% of wax, which is diluted 500 times with water.

The average particle diameter of the wax is preferably 1 to 15 µm, more preferably 2 to 10 µm, and further preferably 3 to 8 µm.

The content of the wax in the paint is, for example, 7 to 40 parts by mass, preferably 10 to 40 parts by mass, and more preferably 12 to 30 parts by mass, per 100 parts by mass of non-volatile components (excluding the wax) in the paint. Note that the non-volatile component (excluding the wax) as used herein refers to a component other than the wax among the components remaining on the adherend to form a resin layer after the paint is applied and baked.

In addition, a plurality of waxes having different average particle diameters may be used in combination. By combining a plurality of waxes having different average particle diameters in this way, it becomes easier to control the size and the number of recesses.

As the wax, for example, one having a softening point of 90 to 160°C, preferably 110 to 140°C, is used.

Carnauba wax, polyethylene wax, and the like can be used as the wax.

As the form of the wax, powder, paste, or water or solvent dispersion form can be appropriately used, but from the viewpoint of dispersion stability in the paint, it is preferable to use water or solvent dispersion form.

The method for applying the paint is preferably spray coating such as air spray, airless spray, or electrostatic spray, roll coater coating, dip coating, electrodeposition coating, and the like, and more preferably spray coating.

In order to dry the paint and form a uniform resin layer, it is preferable to carry out the baking treatment immediately after application.

The conditions in the baking step can be appropriately selected so that the paint can be dried and the resin layer can be formed, but are preferably 150 to 280°C for about 10 seconds to 30 minutes. Further, in order to melt the wax during this baking so as to cause detachment from the coated film, a temperature of 180 to 280°C for about 1 to 30 minutes is more preferable. The thickness of the resin layer after baking is, for example, 1 to 10 µm, preferably 3 to 8 µm.

Fig. 2 is a cross-sectional view schematically illustrating a method for forming a crater-like structure. As shown in Fig. 2, when the paint is applied and dried, the water and solvent are first volatilized to form the resin layer 1. Here, the wax 2 is temporarily placed so as to be embedded in the resin layer 1. Also, the upper portion of the wax 2 is exposed on the surface of the resin layer 1. Subsequently, during baking, the wax 2 melts and separates from the resin layer 1. This forms recesses having a crater-like structure in the resin layer 1.

Thereafter, beverage cans are manufactured, the cans are filled with the drinkable liquid, and sealed, similar to methods commonly used in the industry.

The filling with the drinkable liquid is preferably carried out at a low temperature (such as 1 to 20°C).

According to the method described above, a paint containing a specific amount of wax having a specific average particle diameter is used to form recesses of a specific size in the inner surface of the body with a specific density. Thus, by using an effervescent beverage can with such a special structure formed in a body at a specific density, it is possible to achieve extremely high effervescence.

Note that the drinking liquid filled into the effervescent beverage can according to the present embodiment is not particularly limited as long as it is an effervescent liquid.

Preferably, the drinking liquid to be filled is a beer-like effervescent beverage. The "beer-like effervescent beverage" refers to an effervescent beverage that has a flavor, taste, and texture equivalent or similar to beer, regardless of its alcohol content, use of malt and hops, and fermentation, and has a high thirst-quenching effect and drinkability (the ability to continue drinking without getting bored). The beer-like effervescent beverage may be an alcoholic beverage, or a so-called non-alcoholic beverage or low-alcoholic beverage having an alcohol content of less than 1% by volume. Moreover, it may be a malt-based beverage, a non-malt-based beverage, a fermented beverage produced through a fermentation process, or a non-fermented beverage produced without undergoing a fermentation process.

Specific examples of beer-like effervescent beverages include beers, low-malt beers made from malt, effervescent alcoholic beverages containing no malt, low-alcohol effervescent beverages, and non-alcoholic beers. In addition, liqueurs obtained by mixing a beverage produced from malt through a fermentation process with an alcohol-containing distillate may also be used.

More preferably, the drinking liquid to be filled is beer. When the effervescent beverage can according to the present embodiment is filled with beer, foam is generated from the inner surface of the can at the same time as the cap is opened, and the foam and beer can be drunk together.

However, even when filled with beverages other than beer, the aroma components are volatilized and dispersed due to effervescence, allowing for a strong sensation of the flavor of the contents.

Preferably, the effervescent beverage has a gas pressure of 2 to 4 gas volumes.

### Examples

In order to describe the present invention in more detail, examples carried out by the present inventors are described below.

### (Control Group)

An aluminum container (350 ml capacity) having a bottom surface and a body was prepared. A water-based epoxy-acrylic paint containing 1 part by mass of carnauba wax having an average particle diameter of 0.3 µm per 100 parts by mass of non-volatile components (excluding the wax) in the paint was also prepared. The prepared paint was applied to the entire inner surface of the body of the container by spray coating, followed by heating at 200°C for 2 minutes to obtain a beverage can of the control group. The thickness of the body resin layer was 5 µm on average.

### (Experimental Group 1)

As the wax, a wax having an average particle diameter of 6 µm was used in an amount of 7.5 parts by mass based on 100 parts by mass of non-volatile components (excluding the wax) in the paint. Otherwise, a beverage can according to Example 1 was obtained in the same manner as in the control group.

### (Experimental Group 2)

As waxes, a wax having an average particle diameter of 6 µm (first wax) and a wax having an average particle diameter of 4 µm (second wax) were used. The amount of the first wax was 7.5 parts by mass based on 100 parts by mass of non-volatile components (excluding the wax) in the paint. The amount of the second wax was 7.5 parts by mass based on 100 parts by mass of non-volatile components (excluding the wax) in the paint.

Other points were the same as those of the control group, and a beverage can according to experimental group 2 was obtained.

### (Measurement of Gas Release Amount)

In each of the prepared beverage cans, 350 ml of beer was poured in quietly, and the mass was measured. After that, it was left to stand for 5 minutes, and the mass was measured again. The difference in mass before and after allowing to stand for 5 minutes was calculated as the "gas release amount". The measurement was carried out on 5 cans for each beverage can. Table 1 below presents the upper limit value and lower limit value of the gas release amount measurement value for each beverage can.

**[Table 1]**

| | Control Group | Experimental Group 1 | Experimental Group 2 |
|---|---|---|---|
| Gas Release Amount (g) | 0.01 to 0.02 | 0.21 to 0.26 | 0.29 to 0.34 |

As presented in Table 1, the gas release amount was significantly greater in experimental group 1 and experimental group 2 than in the control group. In addition, experimental group 2 was even greater than experimental group 1. The gas release amount represents the amount of gas released (magnitude of effervescence), that is, the greater this value, the higher the effervescence (greater effervescence).

### (Evaluation of Coverage)

Each prepared beverage can was filled with beer and closed on the top surface with a can lid in a fully open manner. After filling, the beverage can was allowed to stand at 4°C for 24 hours. Next, the coverage was evaluated by setting the criterion for the covering time (the time taken for the bubbles to rise from the beverage can upon opening the beverage can, covering the top end portion of the beverage can with the bubbles) as 10 seconds. Ten cans were tested for each beverage can, and the number of cans with a covering time of 10 seconds or less was counted. Table 2 presents the results.

**[Table 2]**

| | Control Group | Experimental Group 1 | Experimental Group 2 |
|---|---|---|---|
| Number for which covering time was within 10 seconds (cans) | 0 | 3 | 10 |

As presented in Table 2, the coverage was also greater in experimental group 2, experimental group 1, and the control group, in that order. Based on the evaluation results for coverage, it was found that both experimental groups 1 and 2 were superior to the control group, with experimental group 2 being particularly superior.

### (Measurement of Surface Condition)

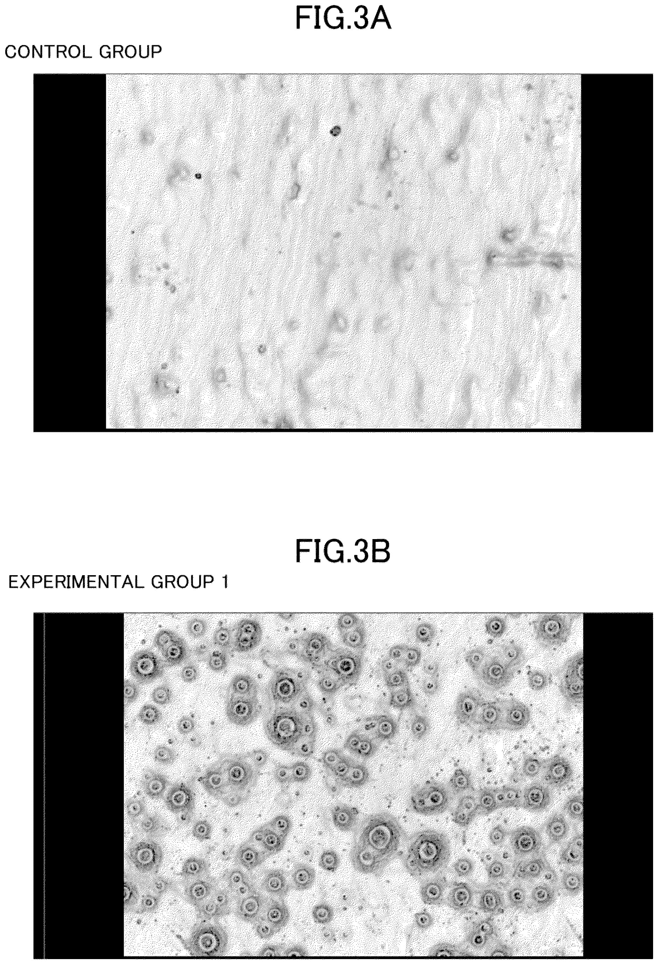

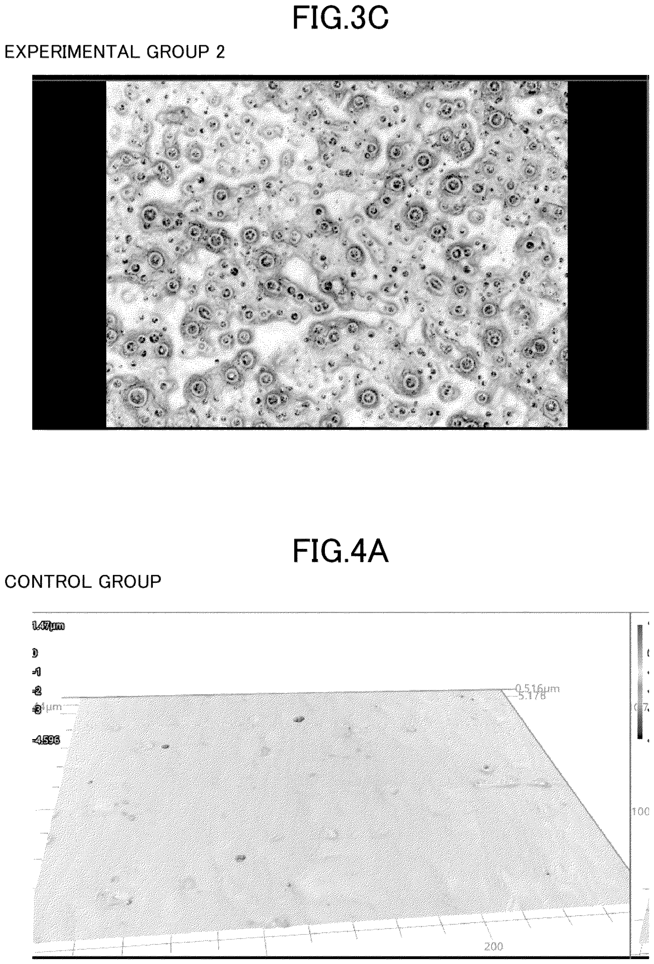

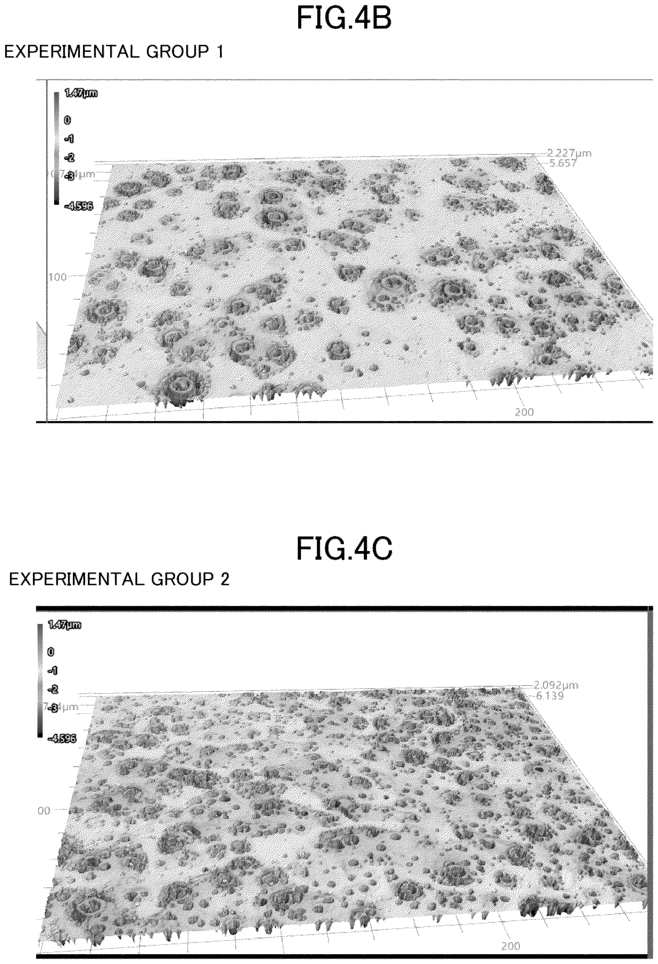

The surface condition of the inner surface of the body of each beverage can obtained was observed. Specifically, a white interferometer-equipped laser microscope VK-X3000 (manufactured by Keyence Corporation) was used to obtain an image of the inner surface of the body. Figs. 3A to 3C illustrate the images obtained for the control group, experimental group 1, and experimental group 2, respectively. In addition, Figs. 4A to 4C illustrate images acquired by 3D-processing the images obtained for the control group, experimental group 1, and experimental group 2, respectively.

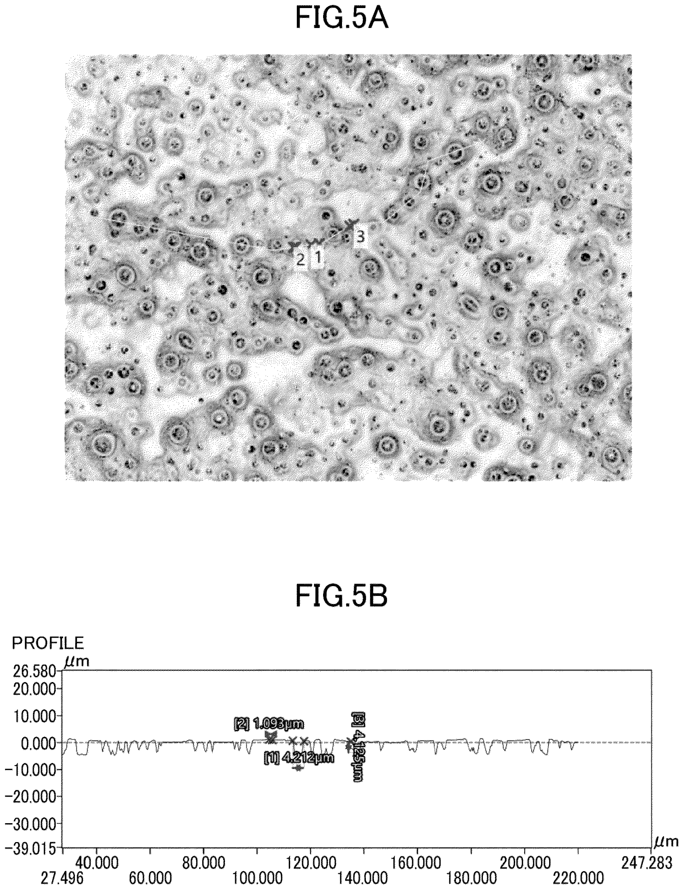

In addition, experimental group 2 was subjected to surface profile measurement. Fig. 5A is a diagram illustrating the measurement positions of the surface profile. That is, the surface profile was measured along the line segment illustrated in Fig. 5A. Fig. 5B is a graph illustrating the measurement results of the surface profile. The horizontal axis of Fig. 5B represents the position, and the vertical axis represents the height (depth) from the baseline.

Furthermore, based on the obtained image, the number of recesses with a diameter of 5 µm or more (first recesses) and recesses with a diameter of 1 µm or more and less than 5 µm (second recesses) was counted using a white interferometer-equipped laser microscope VK-X3000 (manufactured by Keyence Corporation), and the number per 1 mm² was obtained.

In counting the number of recesses, the number of recesses having a depth of 1 µm or more from the baseline was counted.

Table 3 presents the results. Note that the structure counted as the first recess had a diameter of 8.8 µm at most.

**[Table 3]**

| | Control Group | Experimental Group 1 | Experimental Group 2 |
|---|---|---|---|
| First Recess (counts/mm²) | 0 | 256 | 768 |
| Second Recess (counts/mm²) | 0 | 6000 | 9552 |

### (Summary of Results)

It was confirmed that experimental groups 1 and 2, where 200 to 2000 of the first recesses were provided per 1 mm², had a high gas release amount and coverage as well as high effervescence compared to the control group where the first recesses could not be confirmed. Experimental group 2, where the number of second recesses per 1 mm² was 7000 to 15000, exhibited even higher effervescence.

### Reference Signs List

- 1: resin layer
- 2: wax

## Claims

1. An effervescent beverage can comprising:
a top surface;
a bottom surface; and
a body, wherein
an inner surface of the body is provided with first recesses and second recesses, the first recesses have a diameter of 5 um or more and 20 um or less, **characterised in that** the number of the plurality of first recesses is 200 to 2000 per 1 mm², the second recesses have a diameter of 0.5 um or more and less than 5 um, and the number of the plurality of second recesses is 7000 to 15000 per 1 mm²

2. The effervescent beverage can according to claim 1, wherein
the number of the first recesses is 256 to 768 per 1 mm₂,
the number of the second recesses is 6000 to 9552 per 1 mm².

3. The effervescent beverage can according to claim 1 or 2, wherein the first recesses have a diameter of 5 um or more and 8.8 µm or less.

4. The effervescent beverage can according to claim 1 to 3, wherein
the inner surface of the body is provided with a resin layer, and
the first recesses are formed in the resin layer.

5. The effervescent beverage can according to any one of claims 1 to 4, wherein the top surface is formed by a can lid configured to be opened in a fully open manner.

6. An effervescent beverage comprising:
the effervescent beverage can according to claim 5; and
a drinkable liquid filled in the beverage can, wherein
upon opening, the drinkable liquid is caused to effervesce so as to hide a top end portion of the beverage can.

7. The effervescent beverage according to claim 6, which is a beer-taste beverage.

## Patentansprüche

1. Dose für Brausegetränk, die Folgendes umfasst:
eine obere Fläche;
eine Bodenfläche; und
einen Körper, wobei
eine innere Oberfläche des Körpers mit ersten Vertiefungen und zweiten Vertiefungen bereitgestellt ist, wobei die ersten Vertiefungen einen Durchmesser von 5 µm oder mehr und 20 µm oder weniger aufweisen, **dadurch gekennzeichnet, dass** die Anzahl der Vielzahl an ersten Vertiefungen 200 bis 2000 pro 1 mm² beträgt, die zweiten Vertiefungen einen Durchmesser von 0,5 µm oder mehr und weniger als 5 µm aufweisen und die Anzahl der Vielzahl an zweiten Vertiefungen 7000 bis 15000 pro 1 mm² beträgt

2. Dose für Brausegetränk nach Anspruch 1, wobei
die Anzahl der ersten Vertiefungen 256 bis 768 pro 1 mm₂ beträgt,
die Anzahl der zweiten Vertiefungen 6000 bis 9552 pro 1 mm² beträgt.

3. Dose für Brausegetränk nach Anspruch 1 oder 2, wobei die ersten Vertiefungen einen Durchmesser von 5 µm oder mehr und 8,8 µm oder weniger aufweisen.

4. Dose für Brausegetränk nach einem der Ansprüche 1 bis 3, wobei
die innere Oberfläche des Körpers mit einer Harzschicht bereitgestellt ist, und
die ersten Vertiefungen in der Harzschicht ausgebildet sind.

5. Dose für Brausegetränk nach einem der Ansprüche 1 bis 4, wobei die obere Fläche von einem Dosendeckel gebildet wird, der so konfiguriert ist, dass er vollständig geöffnet werden kann.

6. Brausegetränk, das Folgendes umfasst:
die Dose für Brausegetränk nach Anspruch 5; und
eine trinkbare Flüssigkeit, die in die Dose für Getränk gefüllt ist, wobei beim Öffnen die trinkbare Flüssigkeit zum Brausen gebracht wird, um einen oberen Abschlussteil der Dose für Getränk zu verdecken.

7. Brausegetränk nach Anspruch 6, das ein Getränk mit Biergeschmack ist.

## Revendications

1. Canette pour boisson effervescente comprenant :
une surface supérieure ;
une surface inférieure ; et
un corps, dans laquelle
une surface interne du corps est dotée de premiers renfoncements et de seconds renfoncements, les premiers renfoncements présentent un diamètre de 5 µm ou plus et de 20 µm ou moins, **caractérisée en ce que**
le nombre de la pluralité de premiers renfoncements est de 200 à 2000 pour 1 mm², les seconds renfoncements présentent un diamètre de 0,5 µm ou plus et de moins de 5 µm, et le nombre de la pluralité de seconds renfoncements est de 7000 à 15 000 pour 1 mm²

2. Canette pour boisson effervescente selon la revendication 1, dans laquelle
le nombre des premiers renfoncements est de 256 à 768 pour 1 mm₂,
le nombre des seconds renfoncements est de 6000 à 9552 pour 1 mm².

3. Canette pour boisson effervescente selon la revendication 1 ou la revendication 2, dans laquelle les premiers renfoncements présentent un diamètre de 5 µm ou plus et de 8,8 µm ou moins.

4. Canette pour boisson effervescente selon la revendication 1 à 3, dans laquelle
la surface interne du corps est dotée d'une couche de résine, et
les premiers renfoncements sont formés dans la couche de résine.

5. Canette pour boisson effervescente selon l'une quelconque des revendications 1 à 4, dans laquelle la surface supérieure est formée par un couvercle de canette configuré pour être ouvert de manière complètement ouverte.

6. Boisson effervescente comprenant :
la canette pour boisson effervescente selon la revendication 5 ; et
un liquide potable chargé dans la canette pour boisson, dans laquelle
lors de l'ouverture, le liquide potable est amené à être effervescent de manière à cacher une partie d'extrémité supérieure de la canette pour boisson.

7. Boisson effervescente selon la revendication 6, qui est une boisson au goût de bière.
